(19) Europäisches Patentamt
European Patent Office
Office européen des brevets

(11) Veröffentlichungsnummer: **0 285 971 B1**

# (12) EUROPÄISCHE PATENTSCHRIFT

(45) Veröffentlichungstag der Patentschrift: **03.02.93**

(51) Int. Cl.⁵: **C08L 51/00**, C08L 71/12, //(C08L51/00,71:12),(C08L71/12, 51:00)

(21) Anmeldenummer: **88105030.6**

(22) Anmeldetag: **29.03.88**

## (54) Thermoplastische Formmassen auf Basis von Styrolacrylnitrilcopolymerisaten und Polyphenylenether.

(30) Priorität: **07.04.87 DE 3711703**

(43) Veröffentlichungstag der Anmeldung: **12.10.88 Patentblatt 88/41**

(45) Bekanntmachung des Hinweises auf die Patenterteilung: **03.02.93 Patentblatt 93/05**

(84) Benannte Vertragsstaaten: **BE DE FR GB NL**

(56) Entgegenhaltungen:
**EP-A- 0 130 839**
**EP-A- 0 138 599**
**DE-A- 3 102 394**
**DE-A- 3 526 549**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Seiler, Erhard, Dr.**
**Erpolzheimer Strasse 1**
**W-6700 Ludwigshafen(DE)**
Erfinder: **Gausepohl, Hermann, Dr.**
**Neuweg 10**
**W-6704 Mutterstadt(DE)**
Erfinder: **Boehlke, Klaus, Dr.**
**Gerhart-Hauptmann-Strasse 53**
**W-6717 Hessheim(DE)**
Erfinder: **Ostermayer, Bertram, Dr.**
**Pfaffenpfad 14**
**W-6701 Roedersheim-Gronau(DE)**

EP 0 285 971 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, enthaltend als wesentliche Komponenten

A) 3 bis 97 Gew.-Teile, bezogen auf die Summe aus A und B, eines Styrolacrylnitrilcopolymerisates $A^1$ aus mindestens 50 Gew.-% eines vinylaromatischen Monomeren mit 8 bis 12 C-Atomen, einem nitrilgruppenhaltigen ethylenisch ungesättigten Monomeren mit 3 bis 6 C-Atomen und gegebenenfalls weiteren damit copolymerisierbaren ethylenisch ungesättigten Comonomeren, wobei $A^1$ durch Umsetzen in der Schmelze mit mindestens einer $\alpha,\beta$-ungesättigten Dicarbonylverbindung $A^2$ modifiziert ist, und

B) 3 bis 97 Gew.-Teile, bezogen auf die Summe aus A und B, eines Polyphenylenethers $B^1$ oder eines $B^1$ enthaltenden Polymeranteils,

wobei die Summe aus A und B 100 Gew.-Teile ergibt.

Weiterhin betrifft diese Erfindung die Herstellung dieser Formmassen.

Thermoplastische Formmassen, die Styrolpolymerisate und Polyphenylenether (PPE) enthalten, sind z.B. aus den US-Patentschriften 3 383 435, 4 128 602 sowie 4 128 603 bekannt. Solche Formmassen eignen sich zur Herstellung von Formteilen, die im Vergleich zu solchen Formteilen, die nur das Styrolpolymerisat, aber nicht Polyphenylenether enthalten, eine bessere Wärmeformbeständigkeit haben.

Es ist in der US-Patentschrift 4 360 618 vorgeschlagen worden, Styrolpolymerisate, die 2 bis 8 Gew.-% Acrylnitril einpolymerisiert enthalten, zur Herstellung von Formteilen zu verwenden. Es zeigte sich jedoch, daß schon bei höheren Acrylnitrilgehalten, die über 8,5 Gew.-% liegen, eine Unverträglichkeit mit dem Polyphenylenther auftritt, so daß Formkörper mit schlechten mechanischen Werten aus derartigen Mischungen erhalten werden. Formmassen, die PPE und Styrolacrylnitrilcopolymerisate mit höheren Gehalten an Acrylnitril (SAN), die gegebenenfalls schlagzähmodifiziert sind (ABS), haben sich daher bislang nicht eingeführt.

In der US-Patentschrift 4 387 189 werden Styrolcopolymerisate aus Styrol und Säure-, Säureanhydrid- oder Säurechlorid-Comonomeren, die gegebenenfalls Acrylnitril enthalten können, mit PPE umgesetzt. Nachteilig ist die nichtausreichende mechanische Stabilität der Formkörper, besonders wenn die Copolymeren Acrylnitril enthalten, was vermutlich in der geringen Reaktivität der Comonomeren zum PPE bei Anwesenheit von Acrylnitril begründet ist. Dies gilt insbesondere dann, wenn das Copolymere durch gepfropfte Butadien- oder Acrylatkautschuke schlagzähmodifiziert ist.

In den EP-B 156 990, EP-A 170 946 und EP-A 200 185 werden spezielle Pfropfcopolymerisate, die aus PPE und Styrolacrylnitril-Polymerisaten mit besonderen Monomerbausteinen unter Zuhilfenahme spezieller Kopplungsmittel erhalten wurden, beschrieben. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Die Flammfestausrüstung von thermoplastischen Kunststoffen ist aus Vogel, "Flammfestmachen von Kunststoffen", Hüthig-Verlag, Heidelberg (1966), Seiten 94 bis 102,
Troitzsch, "Brandverhalten von Kunststoffen", Hanser-Verlag, München (1982), Seiten 1 bis 65,
Hirschler, "Developments in Polymer Stabilization", Band 5, Editor G. Scott, Applied Science Publishers, London (1982), Seiten 107 bis 151 bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmassen zeigen Nachteile, die vom Verarbeiter meist nicht toleriert werden. Charakteristisch sind z.B. die Verfärbung der Formmassen sowie die Korrosion von Verarbeitungsmaschinen.

Ohne Verwendung von Synergisten muß die Flammschutzmittelmenge erhöht werden, was zu einer starken Beeinträchtigung der damit ausgerüsteten Thermoplaste und aufgrund einer deutlichen Absenkung der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 V0 oder UL 94 V1.

Außer den vorstehend angeführten Möglichkeiten, thermoplastische Kunststoffe mit Halogen enthaltenden Flammschutzmitteln auszurüsten, gibt es auch die Möglichkeit eines halogenfreien Flammschutzes. So sind aus der EP-A 176 774, der EP-A 176 775 und der DE-A 35 26 549 selbstverlöschende, halogenfreie Formmassen auf Basis von PPE, Styrol, Acrylnitrilpolymerisaten und Phosphorverbindungen bekannt. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Der vorliegenden Erfindung lag daher die Aufgabe zugrunde, thermoplastische Formmassen auf der Grundlage von Styrolacrylnitril- und Polyphenylenetherharzen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch thermoplastische Formmassen, die als wesentliche Komponenten

A) 3 bis 97 Gew.-Teile, bezogen auf die Summe aus A und B, eines Styrolacrylnitrilcopolymerisates $A^1$ aus mindestens 50 Gew.-% eines vinylaromatischen Monomeren mit 8 bis 12 C-Atomen, einem nitrilgruppenhaltigen ethylenisch ungesättigten Monomeren mit 3 bis 6 C-Atomen und gegebenenfalls weiteren damit copolymerisierbaren ethylenisch ungesättigten Comonomeren, wobei $A^1$ durch Umsetzen in der Schmelze mit mindestens einer $\alpha,\beta$-ungesättigten Dicarbonyl-verbindung $A^2$ modifiziert ist, und

B) 3 bis 97 Gew.-Teile, bezogen auf die Summe aus A und B, eines Polyphenylenethers $B^1$ oder eines $B^1$ enthaltenden Polymeranteils,

wobei die Summe aus A und B 100 Gew.-Teile ergibt, enthalten.

Außerdem wurden spezielle Ausgestaltungen der Formmassen gemäß der Unteransprüche und ein Verfahren zu ihrer Herstellung gefunden.

Im Folgenden werden die Formmassen im Einzelnen beschrieben.

Es versteht sich von selbst, daß für selbstverlöschende halogenfreie thermoplastische Formmassen nur solche Komponenten in Frage kommen, die ihrerseits bis auf Spuren frei von Halogen sind.

Unter $A^1$ im Sinne dieser Erfindung wird einmal das Styrolacrylnitrilcopolymerisat selbst und bevorzugt seine Abmischung mit einem schlagzäh modifizierenden gepfropften Butadien- oder Acrylatkautschuk, die durch einfaches Abmischen oder durch Polymerisieren des Styrolacrylnitrilcopolymerisates in Gegenwart des Kautschuks hergestellt sein kann, verstanden, wobei gegebenenfalls übliche Zusätze beigemischt sein können.

Das Styrolacrylnitrilcopolymerisat ist aus mindestens 50 Gew.-%, bezogen auf $A^1$, eines vinylaromatischen Monomeren mit 8 bis 12 C-Atomen, wie $\alpha$-Methylstyrol, para-Methylstyrol, oder insbesondere Styrol selbst und aus einem nitrilgruppenhaltigen, ethylenisch ungesättigten Monomeren mit 3 bis 6 C-Atomen, insbesondere Acrylnitril oder Methacrylnitril hergestellt. Es enthält bevorzugt 15 bis 40, insbesondere 20 bis 38 Gew.-%, bezogen auf $A^1$, der einpolymerisierten Nitrilmonomeren. Es kann ferner noch bis zu 10 Gew.-%, bezogen auf $A^1$, Monomere wie Methacrylsäureester, Acrylsäureester, z.B. Methylmethacrylat oder Ethylmethacrylat, Butylacrylat oder 2-Ethylhexylacrylat sowie Methacrylamide oder Acrylamide oder Gemische dieser Verbindungen einpolymerisiert enthalten.

Diese SAN-Copolymerisate sind an sich bekannt und im Handel erhältlich. Sie werden in üblicher Weise in Lösung, Emulsion oder Masse kontinuierlich oder diskontinuierlich hergestellt. Die Durchschnittsmolekulargewichte (Gewichtsmittel $M_w$), bestimmt durch Gelpermeationschromatographie, liegen im allgemeinen zwischen 10000 und 1 Million.

Zur Schlagzähmodifizierung kann dem SAN-Copolymerisat ein gepfropfter Butadien- oder Acrylatkautschuk zugesetzt sein, und zwar in Mengen von 60 bis 140, bevorzugt 80 bis 120 Gew.-Teilen auf 100 Gew.-Teile des SAN-Copolymerisates.

Diese schlagzähmodifizierten SAN-Copolymerisate, die im Sinne dieser Erfindung als ABS- und ASA-Polymerisate bezeichnet werden, sind an sich bekannt, z.B. aus den EP-A 199 334 und EP-A 201 763, und im Handel erhältlich.

Der an sich bekannte gepfropfte Butadienkautschuk stellt ein Pfropfmischpolymerisat aus einem Butadien-Polymerisat als elastomere Pfropfgrundlage, das eine Glastemperatur von unter 0°C (nach K.H. Illers und H. Breuer, Kolloidzeitschrift 176 (1961) 110) haben sollte, z.B. Polybutadien, und einer Pfropfhülle dar.

Das Pfropfmischpolymerisat ist im allgemeinen aufgebaut aus 20 bis 70, bevorzugt 40 bis 70, insbesondere 55 bis 65 Gew.% der Pfropfgrundlage und 30 bis 80, bevorzugt 30 bis 60, insbesondere 35 bis 45 Gew.%, jeweils bezogen auf das Pfropfmischpolymerisat, der Pfropfhülle. Diese enthält ihrerseits etwa 60 bis 80 Gew.% eines vinylaromatischen Monomeren wie Styrol und etwa 20 bis 40 Gew.%, jeweils bezogen auf die Pfropfhülle, eines anderen ethylenisch ungesättigten Monomeren wie Acrylnitril einpolymerisiert, wobei das Acrylnitril bis zur Hälfte durch Methylacrylat ersetzt sein kann.

Der an sich bekannte gepfropfte Acrylatkautschuk unterscheidet sich vom Butadienkautschuk dadurch, daß als elastomere Pfropfgrundlage üblicherweise ein Polymerisat aus Acrylestern, z.B. n-Butylacrylat oder 2-Ethylhexylacrylat, und gegebenenfalls geringen Mengen anderer copolymerisierbarer Monomerer, verwendet wird, das im allgemeinen mit Hilfe von mehrfunktionellen Monomeren, wie Divinylbenzol oder Di-hydro-di-cyclopentadienylacrylat, vernetzt ist.

Sowohl die Kautschuk- als auch die Pfropfmischpolymerisate werden üblicherweise in Emulsion oder Lösung hergestellt, wobei die Pfropfung auch in bekannter Weise in mehreren Stufen erfolgen kann. Es entstehen Pfropfmischpolymerisate, bei denen die Pfropfhülle in den dem Fachmann bekannten Grenzen auf die elastomere Grundlage gepfropft ist. Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder durch einen anschließenden Agglomerationsschritt. Üblicherweise sollte die mittlere Teilchengröße ($d_{50}$-Wert der integralen Massenverteilung, bestimmt nach der in DE-B 24 27 960 beschriebenen Methode) zwischen 0,1 und 1 $\mu$m bei Pfropfmischpolymerisaten, die in bekannter Weise in Emulsion hergestellt wurden, liegen oder zwischen 0,5 und 10 $\mu$m bei Produkten, die in bekannter Weise in Lösung hergestellt werden.

Das Styrolacrylnitrilcopolymerisat $A^1$ wird vor dem Einmischen in die Formmasse durch Umsetzen in der Schmelze mit mindestens einer ungesättigten $\alpha,\beta$-Dicarbonylverbindung $A^2$ modifiziert. Es handelt sich üblicherweise um eine Verbindung der allgemeinen Formel I

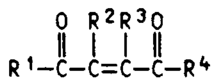

I,

wobei

| | |
|---|---|
| $R^1$ und $R^4$ | Hydroxylgruppen, Aroxy-, Alkoxy-, Aralkoxy- oder Cycloalkoxygruppen mit bis zu 12 C-Atomen, $-NR^5R^6$ oder gemeinsam -O-oder $-NR^5-$, |
| $R^2$ und $R^3$ | Wasserstoff oder, wenn $R^2$ oder $R^3$ Wasserstoff ist, eine Alklygruppe mit bis zu 12 C-Atomen, eine Arylgruppe, gemeinsam eine Alkylengruppe mit 4 C-Atomen oder bei halogenhaltigen Formmassen auch Chlor, |
| $R^5$ und $R^6$ | Wasserstoff, Alkyl-, Aralkyl-, Cycloalkyl- oder Arylgruppen mit bis zu 12 C-Atomen darstellen, die ihrerseits durch $C_1$-$C_4$-Alkyl- oder Alkoxygruppen substituiert sein können. |

Die Substituenten müssen, was sich allerdings von selbst versteht, so beschaffen sein, daß sie die Modifizierungsreaktion nicht verhindern. Es handelt sich daher im allgemeinen um $\alpha,\beta$-ungesättigte Dicarbonsäuren, deren Anhydride, Imide, die gegebenenfalls n-substituiert sind, um Monoester oder Monoamide dieser Dicarbonsäuren, ihre Diester oder Diamide. Bevorzugt sind Maleinsäure, Maleinsäureanhydrid, Methylmaleinsäureanhydrid, bei halogenhaltigen Formmassen auch Chlormaleinsäureanhydrid, die Halbester und Halbamide, wie insbesondere die Halbester der Maleinsäure und Fumarsäure mit 2-Ethylhexylalkohol oder Isopropylalkohol, n-Phenylmaleinimid und besonders bevorzugt Fumarsäure.

Bei der Modifizierung wird die Komponente $A^1$ im allgemeinen in Mengen von 80 bis 99,95, vorzugsweise 90 bis 99,9, insbesondere 95 bis 99,8 Gew.-% und die Komponente $A^2$ üblicherweise in Mengen von 0,05 bis 20, vorzugsweise 0,1 bis 10, insbesondere 0,2 bis 5 Gew.-%, jeweils bezogen auf die Summe aus $A^1$ und $A^2$, eingesetzt. Besonders gute Ergebnisse werden mit 95 bis 99 Gew.-% $A^1$ und 1 bis 5 Gew.-% $A^2$, jeweils bezogen auf die Summe aus $A^1$ und $A^2$, erhalten.

Gegebenenfalls kann $A^1$ mit üblichen Zusätzen in üblichen Mengen abgemischt sein. Es kommen Hilfsmittel in den dem Fachmann bekannten Mengen in Betracht, die für die Herstellung der Komponente $A^1$ bekannt sind, z.B. Mineralöle oder Silikonöle, aber auch übliche Modifizierungsmittel, wie Polymere, Verstärkungs- und Füllstoffe sowie gegebenenfalls Flammschutzmittel.

Zur Herstellung von A ist es erforderlich, daß $A^1$ mit der Verbindung $A^2$ modifiziert, d.h. umgesetzt wird. Die Umsetzung geschieht erfindungsgemäß in der Schmelze. In einer weiteren bevorzugten Ausführungsform wird dabei auf die Initiierung der Umsetzungsreaktion durch Zugabe von Radikalstartern verzichtet. Die Umsetzung läuft also bevorzugt in Abwesenheit oder praktischer Abwesenheit von Radikalstartern ab. Solche Radikalstarter sind dem Fachmann bekannt. Z.B. werden darunter organische Peroxide mit Halbwertszeit des Verfalls (vgl. Modern Plastics, 36 (1959), Heft 2, Seiten 142 bis 148) bei 200°C von 0,1 bis 3000 sec., wie Dicumylperoxid, verstanden.

Zur Herstellung von A werden die Komponenten im allgemeinen bei Temperaturen von 120 bis 280°C, vorzugsweise zwischen 140 und 240°C, innig vermischt und zur Reaktion gebracht. Vorzugsweise verwendet man einen Zweischneckenextruder, der in bekannter Weise mit Knetelementen, zum Teil mit rückwärtsförderndem Gewinde, ausgerüstet sein kann. Die Komponenten werden im allgemeinen gemeinsam dosiert und in einer Aufschmelzzone des Extruders aufgeschmolzen. An diese Zone schließt sich üblicherweise die Reaktionszone an. Vor dem Produktaustrag befindet sich im allgemeinen eine Entgasungszone zur Entfernung der flüchtigen Bestandteile. Die ausgetragene Schmelze wird üblicherweise granuliert.

Die Verweilzeit der Reaktionsmischung in der Mischvorrichtung beträgt im allgemeinen 0,5 bis 20, bevorzugt 1 bis 5 Minuten.

Die Komponente A ist in den erfindungsgemäßen Formmassen zu 3 bis 97, bevorzugt 10 bis 90, besonders bevorzugt 20 bis 80 Gew.-Teilen, bezogen auf 100 Gew.-Teile der Summe aus A und B, enthalten.

Die Komponente B ist in den erfindungsgemäßen Formmassen zu 3 bis 97, bevorzugt 10 bis 90, insbesondere 20 bis 80 Gew.-Teilen, bezogen auf 100 Gew.-Teile der Summe aus A und B, enthalten.

Die in Frage kommenden Polyphenylenether $B^1$ sind an sich bekannt, sie werden nach üblichen Verfahren aus in ortho-Position durch Alkylgruppen, Alkoxigruppen, bei halogenhaltigen Formmassen auch durch Chlor oder Brom disubstituierten Phenolen, durch oxidative Kopplung hergestellt (vgl. US-Patent 3 661 848, 3 378 505, 3 306 874, 3 306 875 und 3 639 656). Die Alkyl- oder Alkoxigruppen, die bevorzugt 1 bis 4 C-Atome, aber kein $\alpha$-ständiges tertiäres Wasserstoffatom enthalten, können bei halogenhaltigen Formmassen auch ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, bei halogenhaltigen Formmassen auch Poly-2,6-dichlor-1,4-phenylenether und Poly-2,6-dibrom-1,4-phenylenether oder Copolymere, wie solche, die 2,3,6-Trimethylphenol enthalten, außerdem Polymermischungen. Bevorzugt ist Poly-2,6-dimethyl-1,4-phenylenether. Die in einem solchen Verfahren hergestellten Polyphenylenether weisen im allgemeinen eine relative Viskosität von 0,3 bis 0,7 dl/g, gemessen in 1 gew.%iger Lösung in Chloroform bei 25°C auf.

$B^1$ kann in reiner Form, aber auch abgemischt mit einem vinylaromatischen Polymeren $B^2$, eingesetzt werden. In diesem Falle enthält B 5 bis 100, bevorzugt 50 bis 100 Gew.%, bezogen auf B, $B^1$ und im übrigen $B^2$. Bei selbstverlöschenden, halogenfreien Formmassen werden mit einem höheren Gehalt an $B^1$ gute Erfolge erzielt. B enthält dann 55 bis 100, bevorzugt 70 bis 100, insbesondere 85 bis 100 Gew.%, bezogen auf B, $B^1$ und im übrigen $B^2$.

$B^2$ wird überwiegend aus vinylaromatischen Monomeren, insbesondere Styrol, ferner kern- oder seitenalkylierten Styrolen hergestellt. Als $B^2$ werden bevorzugt an sich bekannte Styrolhomopolymerisate oder insbesondere an sich bekannte, schlagzäh modifizierte (z.B. durch Butadienpolymerisate) Styrolpolymerisate (HIPS) eingesetzt. Homopolymerisate werden dabei nach den bekannten Verfahren in Masse, Lösung oder Suspension hergestellt (vgl. Ullmanns Ezyclopädie der Technischen Chemie, Band 19, Seiten 265 bis 272, Verlag Chemie, Weinheim 1980). Die Hompolymerisate können mittlere Molekulargewichte (Zahlenmittel des Molekulargewichtes) von 1 000 bis 200 000 aufweisen. Die üblicherweise zur Herstellung schlagzäh modifizierter Styrolpolymerisate angewandten Verfahren sind die Polymerisation in Masse oder Lösung, wie beispielsweise in der US-Patentschrift 2 694 692 beschrieben und Verfahren zur Masse-Suspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Die schlagzäh modifizierten Styrolpolymerisate (HIPS) weisen im allgemeinen einen Schmelzindex (MFI (200°C/5 kg) gemessen nach DIN 53 735) von 2 bis 30, insbesondere von 2,5 bis 20 g/10 min. auf.

Zur Schlagzäh-Modifizierung können die erfindungsgemäßen Formmassen zusätzlich zu A und B als Komponente C Synthesekautschuk enthalten, der von den oben beschriebenen gepfropften Butadien- und Acrylatkautschuken oder schlagzäh modifizierten Styrolpolymerisaten verschieden ist. In Frage kommen Elastomere wie Polybutadienkautschuk, Acrylatkautschuk, Styrolbutadienkautschuk, Polybutenkautschuk, hydrierter Styrolbutadienkautschuk, Acrylnitrilbutadienkautschuk, Ethylenpropylenkautschuk, Polyisoprenkautschuk, styrolgepfropfte Ethylenpropylenkautschuke, thermoplastische Ethylenpropylenkautschuke, thermoplastische Polyesterelastomere, Ethylenkautschuk und Ionomere, Styrolbutadienblockcopolymere einschließlich AB-, ABA-, ABAB-verschmiert(taper)-Block-Copolymere, Stern-Block-Copolymere und ähnliche, analoge Isoprenblockpolymerisate, und insbesondere (teil)hydrierte Blockcopolymere. Die Komponente C kann in Mengen bis 40, vorzugsweise zwischen 1 und 20 Gew.-Teilen, bezogen auf 100 Gew.-Teile der Summe aus A und B, in der Formmasse vorhanden sein.

Zur Flammfestausrüstung können die erfindungsgemäßen Formmassen, wenn sie halogenfrei sind, zusätzlich zu A und B 1 bis 40, insbesondere 1 bis 20, besonders bevorzugt 5 bis 20 Gew.%, bezogen auf die Formmasse, einer Phosphor enthaltenden Verbindung D enthalten.

Es handelt sich dabei um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phoshin (-3), Diphosphin (-2),

Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid oder Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein.

Beispiele sind Calciumhypophosphit und Magnesiumhypophosphit, daneben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)-phosphinsäureamide, wie z.B. Diphenylphosphinäsure-dimethylamid und Sulfonamidoaryl(alkyl)-phosphinsäurederivate, wie z.B. p-Tolylsulfonamidodiphenylphosphinsäure. Bevorzugtn eingesetzt werden Hydrochinon- und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris-(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat,Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)-phosphinsäuren, wie z.B. Poly-[natrium(I)-methylphenylphosphinat], eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A,

Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können halogenfreie polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Methylneopentylphosphat (Methanphosphonsäureneopentylester) und Mobil Antiblaze 19.

Darüber hinaus können die erfindungsgemäßen thermoplastischen Formmassen übliche Zuschlagstoffe E in wirksamer Menge enthalten, im allgemeinen bis zu 50, vorzugsweise bis 25 Gew.-%, bezogen die Formmasse. Als Zuschlagstoffe kommen die Styrolacrylnitrilcopolymerisate $A^1$ und die oben beschriebenen ABS- und ASA-Polymerisate in Frage, die, was sich allerdings von selbst versteht, die mechanischen Eigenschaften von aus der Formmasse hergestellten Formkörpern nicht verschlechtern dürfen, daneben übliche Hitze und Lichtstabilisatoren, Gleit- und Entformungsmittel, Färbemittel, wie Farbstoffe und Pigmente in üblichen Mengen. Geeignete Zusatzstoffe sind auch Verstärkungsmittel wie Glasfasern, Kohlenstoffasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel, bei halogenhaltigen Formmassen z.B. bromierte oder chlorierte organische Verbindungen, gegebenenfalls in Mischung mit Antimon-Verbindungen.

Die Herstellung der erfindungsgemäßen thermoplastischen Formmassen erfolgt zweckmäßigerweise durch Mischen der Komponenten bei Temperaturen im Bereich von 200 bis 320 ° C, vorzugsweise 250 bis 300 ° C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die mittleren Verweilzeiten beim Mischen liegen im Bereich von 0,5 bis 30 min., vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Bei der Herstellung der Formmassen können einzelne Komponenten miteinander reagieren, so daß im Endprodukt keine reine Mischung der Komponenten mehr vorliegt.

Dieses wird insbesondere dann angestrebt, durch z.B. Mischen bei erhöhter Temperatur über 250 ° C, wenn eine besonders gute Anbindung von Komponenten untereinander erforderlich ist.

Aus den erfindungsgemäßen thermoplastischen Formmassen lassen sich durch Spritzgießen oder Extrusion Formkörper mit vorteilhaften Eigenschaften herstellen.

Die erfindungsgemäße thermoplastische Formmasse läßt sich besonders einfach, z.B. mit bereits fertigen, im Handel erhältlichen ABS- und ASA-Polymerisaten herstellen. Sie zeichnen sich durch eine gute Verarbeitbarkeit und Wärmeformbeständigkeit, gute mechanische Eigenschaften und einen hohen Oberflächenglanz aus. Die Formmassen weisen eine überraschend gute Anbindung des PPE an das Styrolacrylnitrilcopolymerisat auf. Dies zeigt sich in den guten mechanischen Eigenschaften der Formmasse, z.B. der Schmelzfließfähigkeit, und der daraus hergestellten Formkörper.

Unter einer selbstverlöschenden Formmasse im Sinne dieser Erfindung werden flammfestausgerüstete Formmassen verstanden, die im die im folgenden beschriebenen Brandklassen UL 94, V0, V1 oder 5V eingeordnet werden können.

Die in den Beispielen und Vergleichsversuchen erwähnten Tests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94, V0, V1, V2 oder 5V.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nie länger als 60 s dauern. Die übrigen Kriterien sind identisch mit den oben

erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.
Eine Einstufung in die Brandklasse UL 94 V5 erfolgt dann, wenn folgende Kriterien erfüllt sind:
Die Nachbrenn- oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes noch nicht brennendes Abtropfen noch vollständiges Abbrennen eintreten.
2. Die (Kerb)schlagzähigkeiten wurden nach DIN 53453 gemessen.
3. Die Schmelzfließfähigkeit (MFI (200°/5 kg)-Wert) wurde nach DIN 53735 ermittelt.
Für die Ausführung von Beispielen und Vergleichsversuchen wurden die nachfolgend beschriebenen Stoffe verwendet.

Komponente A

1. Modifiziertes Styrolacrylnitrilcopolymerisat A (1)
98 kg eines ABS-Polymerisates $A^1$ (1) aus einer Mischung aus 49 kg eines SAN-Copolymerisates aus 65 Gew.% Styrol und 35 Gew.% Acrylnitril mit einem Gewichtsmittel des Molekulargewichtes von 90000 g/mol und 49 kg eines Emulsionspfropfmischpolymerisates mit einem mittleren Teilchendurchmesser von 0,5 $\mu$m ($d_{50}$-Wert der integralen Massenverteilung) aus 60 Gew.%, bezogen auf das Emulsionspfropfmischpolymerisat, eines Polybutadiens mit einer Glastemperatur von unter 0°C (Pfropfgrundlage) und 40 Gew.%, bezogen auf das Emulsionspfropfmischpolymerisat, eines Copolymerisates aus 65 Gew.% Styrol und 35 Gew.% Acrylnitril als Pfropfhülle, wobei das Emulsionspfropfmischpolymerisat bei 95°C mit anschließender Fällung und Trocknung hergestellt wurde, wurden mit 2 kg Fumarsäure in einen Zweischneckenextruder der Firma Werner & Pfleiderer dosiert und in einem ersten Teil unter Verwendung von Knetelementen bei 180°C aufgeschmolzen, in einem zweiten Teil unter Kneten und Verwendung von zurückfördernden Knetelementen bei 200°C umgesetzt und anschließend in einer Entgasungszone bei 180°C durch Anlegen von Vakuum entgast. Die mittlere Verweilzeit im Extruder betrug 4 Minuten. Die austretende Schmelze wurde durch ein Wasserbad geleitet, granuliert und getrocknet.
2. Modifiziertes Styrolacrylnitrilcopolymerisat A (2)
98 kg des ABS-Polymerisates von (1), jedoch mit dem Unterschied, daß die Pfropfhülle statt aus 40 Gew.%, bezogen auf das Emulsionspfropfmischpolymerisat,Styrol/Acrylnitril (65:35) aus 2 Stufen aufgebaut ist, nämlich aus 35 Gew.% der Styrolacrylnitrilmischung (1. Pfropfstufe) und 5 Gew.%, jeweils bezogen auf das Emulsionspfropfmischpolymerisat, Methylacrylat (2. Pfropfstufe), ($A^1$ (2)), wurden wie bei (1) mit 2 kg Fumarsäure in der Schmelze umgesetzt.
3. Modifiziertes Styrolacrylnitrilcopolymerisat A (3)
96 kg des bei (2) verwendeten ABS-Polymerisates $A^1$ (2) wurden mit 4 kg Maleinsäure-monoisopropylester wie bei (1) in der Schmelze umgesetzt.
4. Modifiziertes Styrolacrylnitrilcopolymerisat A (4)
98 kg eines ASA-Polymerisates aus einer Mischung aus 49 kg eines SAN-Copolymerisates aus 65 Gew.% Styrol und 35 Gew.% Acrylnitril mit einem Gewichtsmittel des Molekulargewichtes von 100000 g/mol und 49 kg eines Emulsionspfropfmischpolymerisates mit einem mittleren Teilchendurchmesser von 490 Nanometern ($d_{50}$-Wert der integralen Massenverteilung), aufgebaut aus 60 Gew.%, bezogen auf das Emulsionspfropfmischpolymerisat, eines vernetzten Acrylatkautschuks (98 Gew.% N-Butylacrylat und 2 Gew.% Dihydro-di-cyclopentadienylacrylat) als Pfropfgrundlage und 40 Gew.%, bezogen auf das Emulsionspfropfmischpolymerisat, eines Copolymerisates aus 65 Gew.% Styrol und 35 Gew.% Acrylnitril als Pfropfhülle, wurden wie bei (1) in der Schmelze mit 2 kg Fumarsäure umgesetzt.

Nicht erfindungsgemäße Pfropfmischpolymerisate

5. Als Styrolacrylnitrilcopolymerisat A (1V) wurde ein ABS-Polymerisat wie bei (1) beschrieben, verwendet, jedoch mit dem Unterschied, daß die Pfropfhülle des Emulsionspfropfmischpolymerisates statt 40 Gew.% der Styrol/Acrylnitrilmischung 36 Gew.% dieser Mischung und 4 Gew.%, jeweils bezogen auf das Emulsionspfropfmischpolymerisat, Fumarsäure einpolymerisiert enthält.
6. Als Styrolacrylnitrilcopolymerisat A (2V) wurde ein ABS-Polymerisat wie bei (2) beschrieben, verwendet, jedoch mit dem Unterschied, daß die Pfropfhülle des Emulsionspfropfmischpolymerisates in der 2. Propfstufe statt 5 Gew.% Methylmethacrylat 1 Gew.% Methylmethacrylat und 4 Gew.%, jeweils bezogen

auf das Emulsionspfropfmischpolymerisat, Fumarsäure einpolymerisiert enthält.

7. Als Styrolacrylnitrilcopolymerisat A (3V) wurde ein ABS-Polymerisat wie bei (2) beschrieben, verwendet, jedoch mit dem Unterschied, daß die Pfropfhülle des Emulsionspfropfmischpolymerisates in der 2. Pfropfhülle statt 5 Gew.% Methylmethacrylat 5 Gew.%, jeweils bezogen auf das Emulsionspfropfmischpolymerisat, Maleinsäuremonoisopropylester einpolymerisiert enthält.

8. Als Styrolacrylnitrilcopolymerisat A (4V) wurde ein ASA-Polymerisat wie bei (4) beschrieben, verwendet, jedoch mit dem Unterschied, daß die Pfropfhülle des Emulsionspfropfmischpolymerisates statt 40 Gew.% Styrol/Acrylnitril (65:35) 36 Gew.% Styrol/Acrylnitrl (65:35) und 4 Gew.%, jeweils bezogen auf das Emulsionspfropfmischpolymerisat, Fumarsäure einpolymerisiert enthält.

9. Als A (5V) wurde ein modifiziertes Styrolacrylnitrilcopolymerisat wie bei (2) beschrieben, verwendet, mit dem Unterschied, daß die Umsetzung mit Fumarsäure in Gegenwart von 0,5 kg Dicumylperoxid durchgeführt wurde.

10. Als A (6V) wurde ein Pfropfmischpolymerisat aus PPE und einem Styrolacrylnitrilpolymerisat gemäß der DE-A 35 26 549 hergestellt:

Durch kontinuierliche Copolymerisation von 60 Gew.% Styrol, 35 Gew.% Acrylnitril, 3 Gew.% Chlormethylstyrol und 2 Gew.% p-Chlormethylstyrol wurde unter Zusatz von 60 Gew.-Teilen Ethylbenzol, bezogen auf 100 Gew.-Teile Monomere, bei 140°C und 9 bar bei 6 h Verweilzeit ein Copolymeres mit statistischer Verteilung der Monomeren und mit $\overline{M}_w$ = 39000 hergestellt. Das Copolymer wurde über einen Extruder entgast und als Granulat gewonnen. 50 g des getrockneten Copolymeren wurden mit 1000 g Toluol und anschließend mit 50 g Poly-(2,6-dimethyl-1,4-phenylen)ether mit einer relativen Viskosität von 0,61 (gemessen in 1 gew.%iger Lösung in $CHCl_3$ bei 25°C) versetzt und auf 90°C erwärmt. Nach Abkühlen auf 30°C fügte man sofort 50 g einer 50 gew.%igen wäßrigen Natronlauge unter starkem Rühren zu. Nach 5 min fügte man 5 g Tetrabutylammoniumhydrogensulfat zu. Es wurde 4 h bei Raumtemperatur gerührt und in 1 h auf 60°C erwärmt, die Reaktion 1 h bei 60°C gehalten und anschließend 500 g Toluol hinzugefügt. Es wurde wie üblich aufgearbeitet.

11. Als A (7V) wurde ein Pfropfmischpolymerisat aus PPE und einem Styrolacrylnitrilpolymerisat gemäß der DE-A 34 32 749 hergestellt:

100 g PPE mit einer relativen Viskosität von [$\eta$] = 0,61 dl/g (gemessen in 1 gew.%iger Lösung bei 25°C in Chloroform) wurden mit Dimethyldichlorsilan in Toluol unter Verwendung von Tributylamin als Säurefänger umgesetzt. Das Umsetzungsprodukt wurde anschließend zu 100 g eines Styrolacrylnitrilpolymerisats (bestehend aus 72 Gew.% Styrol, 25 % Acrylnitril und 3 Gew.% Hydroxibutylacrylat, mit einem $\overline{M}_w$ = 60000, hergestellt durch kontinuierliche Polymerisation) in Toluol unter Verwendung von Tributylamin als Säurefänger in 20 min zulaufen gelassen. Das Pfropfmischpolymerisat wurde durch Entfernen des Lösungsmittels erhalten.

Komponente B

1. $B^1$: Poly-2,6-dimethyl-1,4-phenylenether mit einer relativen Viskosität von 0,61 dl/g (gemessen in 1 gew.%iger Lösung in Chloroform bei 25°C).
2. $B^2$: Polystyrol, hergestellt in Gegenwart von 10 Gew.-Teilen Polybutadien vom medium cis-Typ (HIPS), (Diene®HXC 529) (® eingetragenes Warenzeichen der Firma Bayer).

Komponente C

1. C(1): Pfropfkautschuk, bestehend aus 80 Gew.% Polybutadien und 20 Gew.% Methylmethacrylat als Pfropfhülle.
2. C(2): Symmetrisches Styrol-Butadien-Styrol-3-Blockcopolymeres, enthaltend 30 Gew.% Styrol, mit einem Gewichtsmittel des Molekulargewichtes von 90000 (Cariflex® TR 1102, Fa. Shell).

Komponente D

1. D(1): Triphenylphosphinoxid
2. D(2): Triphenylphosphat
3. D(3): Tris(4-decylphenyl)phosphit

Komponente E

1. E(1): Irganox® PS 800 (® eingetragenes Warenzeichen der Firma Ciba Geigy).

2. E(2): oxidiertes PE-Wachs (A-Wachs der Firma BASF).

Beispiele 1 bis 10 und Vergleichsversuche 1* bis 9*

In der folgenden Tabelle 1 sind Beispiele und Vergleichsversuche von thermoplastischen Formmassen aufgeführt. Die Formmassen wurden durch Aufschmelzen und Mischen der angegebenen Komponenten in den angegebenen Mengen in einem Zweischneckenextruder bei 280 °C und einer Verweilzeit von 3 Minuten und anschließendes Granulieren erhalten.

Beispiele 11 bis 17 und Vergleichsversuche 10* bis 14*

In der folgenden Tabelle 2 sind Beispiele von selbstverlöschenden thermoplastischen Formmassen und Vergleichsversuche aufgeführt. Die Formmassen wurden durch Aufschmelzen und Mischen der angegebenen Komponenten in den angegebenen Mengen in einem Zweischneckenextruder bei 280 °C und einer Verweilzeit von 3 Minuten und anschließendem Granulieren erhalten.

Tabelle 1

| Beispiel | Vergleichsversuch | Komponenten, Mengenangaben in kg: A Art | A Menge | $B^1$ | $B^2$ | C(1) | C(2) | E(1) | E(2) | Schlagzähigkeit [kJ/cm²] 23°C | Schlagzähigkeit [kJ/cm²] -40°C | Kerbschlagzähigkeit [kJ/cm²] 23°C | Kerbschlagzähigkeit [kJ/cm²] -40°C | MFI [g/10 min] |
|---|---|---|---|---|---|---|---|---|---|---|---|---|---|---|
| 1 | | A(1) | 70 | 30 | - | - | 5 | 1 | - | k.Br.[1] | k.Br. | 14 | 6 | 10 |
| 2 | | A(1) | 60 | 20 | 20 | - | - | - | 2 | k.Br. | k.Br. | 9 | 5 | 8 |
| 3 | | A(1) | 30 | 70 | 5 | - | 10 | 1 | - | k.Br. | 70 | 10 | 5 | 6 |
| | 1* | A(1V) | 70 | 30 | - | - | 5 | 1 | - | 80 | 30 | 6 | 1 | 12 |
| | 2* | A(1V) | 30 | 70 | 5 | - | 10 | 1 | - | 60 | 20 | 5 | 1 | 10 |
| 4 | | A(2) | 60 | 40 | 5 | - | 10 | 1 | - | k.Br. | k.Br. | 14 | 8 | 6 |
| 5 | | A(2) | 80 | 20 | 5 | - | 5 | 1 | - | k.Br. | k.Br. | 16 | 9 | 10 |
| | 3* | A(2V) | 60 | 40 | 5 | - | 10 | 1 | - | 70 | 20 | 5 | 1 | 13 |
| | 4* | A(2V) | 80 | 20 | 5 | - | 5 | 1 | - | 80 | 15 | 6 | 1 | 15 |
| | 5* | A(5V) | 60 | 40 | 5 | - | 10 | 1 | - | k.Br. | 40 | 9 | 1 | 1 |
| | 6* | A(5V) | 80 | 20 | 5 | - | 5 | 1 | - | k.Br. | 30 | 9 | 2 | 0,5 |
| 6 | | A(3) | 50 | 50 | - | - | 8 | 1 | - | k.Br. | k.Br. | 12 | 7 | 7 |
| 7 | | A(3) | 70 | 30 | - | - | 5 | 1 | 2 | k.Br. | k.Br. | 17 | 10 | 12 |
| | 7* | A(3V) | 50 | 50 | - | - | 10 | 1 | - | 70 | 20 | 4 | 1 | 10 |
| | 8* | A(3V) | 70 | 30 | - | - | 5 | 1 | 2 | 90 | 60 | 7 | 2 | 12 |
| 8 | | A(4) | 40 | 60 | 5 | - | 10 | 1 | - | k.Br. | 80 | 18 | 6 | 7 |
| 9 | | A(4) | 70 | 30 | 2 | - | 10 | 1 | - | k.Br. | k.Br. | 14 | 3 | 13 |
| 10 | | A(4) | 50 | 50 | 2 | 5 | 10 | 1 | - | k.Br. | k.Br. | 16 | 10 | 10 |
| | 9* | A(4V) | 40 | 60 | 5 | - | 10 | 1 | - | 60 | 20 | 5 | 1 | 10 |

[1] kein Bruch

Tabelle 2

| Beispiel | Vergleichsversuch | Komponenten, Mengenangaben in kg: A Art | A Menge | $B^1$ | C(2) | D(1) | D(2) | D(3) | Brandschutzklasse UL 94 | Abtropfen br.[1] | Abtropfen n.br.[2] | Kerbschlagzähigkeit [kJ/m²] +23°C |
|---|---|---|---|---|---|---|---|---|---|---|---|---|
| 11 | | A(1) | 41 | 47 | - | - | 12 | - | 5V | nein | nein | 10 |
| | 10* | A(1V) | 41 | 47 | - | - | 12 | - | n.b.[3] | ja | ja | 2 |
| | 11* | A'(1) | 34 | 40 | - | - | 12 | - | V0 | nein | nein | 6 |
| | | A(6V) | 14 | | | | | | | | | |
| 12 | | A(2) | 35 | 46 | 8 | 9 | - | - | V0 | nein | nein | 13 |
| 13 | | A(2) | 40 | 41 | 7 | - | 10 | - | V0 | nein | nein | 14 |
| 14 | | A(2) | 35 | 41 | 7 | 10 | - | - | V0 | nein | nein | 12 |
| | | A(2V) | 5 | | | | | | | | | |
| 15 | | A(3) | 32 | 50 | 8 | 10 | - | - | V0 | nein | nein | 13 |
| 16 | | A(3) | 41 | 46 | - | 13 | - | 0,1 | 5V | nein | nein | 11 |
| | 12* | A(3V) | 41 | 46 | - | 13 | - | 0,1 | n.b. | ja | ja | 4 |
| | 13* | A'(2) | 33 | 38 | - | 13 | - | 0,1 | V1 | nein | nein | 7 |
| | | A(7) | 16 | | | | | | | | | |
| 17 | | A(4) | 31 | 48 | 9 | 12 | - | - | 5V | nein | nein | 13 |
| | 14* | A(4V) | 31 | 48 | 9 | 12 | - | - | n.b. | ja | ja | 3 |

1) brennend
2) nicht brennend
3) n.b. = nicht bestanden

## Patentansprüche

**1.** Thermoplastische Formmassen, enthaltend als wesentliche Komponenten

A) 3 bis 97 Gew.-Teile, bezogen auf die Summe aus A und B, eines Styrolacrylnitrilcopolymerisates $A^1$ aus mindestens 50 Gew.-% eines vinylaromatischen Monomeren mit 8 bis 12 C-Atomen, einem

nitrilgruppenhaltigen ethylenisch ungesättigten Monomeren mit 3 bis 6 C-Atomen und gegebenenfalls weiteren damit copolymerisierbaren ethylenisch ungesättigten Comonomeren, wobei $A^1$ durch Umsetzen in der Schmelze mit mindestens einer $\alpha,\beta$-ungesättigten Dicarbonylverbindung $A^2$ modifiziert ist, und

B) 3 bis 97 Gew.-Teile, bezogen auf die Summe aus A und B, eines Polyphenylenethers $B^1$ oder eines $B^1$ enthaltenden Polymeranteils,

wobei die Summe aus A und B 100 Gew.-Teile ergibt.

**2.** Thermoplastische Formmassen nach Anspruch 1, dadurch gekennzeichnet, daß die Verbindung $A^2$ Maleinsäure, Maleinsäureanhydrid, Methylmaleinsäureanhydrid, ein Halbester der Malein- oder Fumarsäure mit einem $C_1$-$C_{12}$-Alkohol oder deren Halbamid, N-Phenylmaleinimid oder Fumarsäure ist.

**3.** Thermoplastische Formmassen nach den Ansprüchen 1 bis 2, dadurch gekennzeichnet, daß die Verbindung $A^2$ Fumarsäure oder der Maleinsäurehalbester des Isopropyl- oder des 2-Ethylhexylalkohols ist.

**4.** Thermoplastische Formmassen nach den Ansprüchen 1 bis 3, dadurch gekennzeichnet, daß man die Modifizierung von $A^1$ in Abwesenheit oder in praktischer Abwesenheit von Radikalstartern durchführt.

**5.** Thermoplastische Formmassen nach den Ansprüchen 1 bis 4, dadurch gekennzeichnet, daß $A^1$ mit 0,05 bis 20 %, bezogen auf die Summe aus $A^1$ und $A^2$, der Verbindung $A^2$ modifiziert ist.

**6.** Thermoplastische Formmassen nach den Ansprüchen 1 bis 5, dadurch gekennzeichnet, daß die Formmassen 20 bis 80 Gew.-Teile der Komponente A und 20 bis 80 Gew.Teile, jeweils bezogen auf 100 Gew.-Teile der Summe aus A und B, der Komponente B enthalten.

**7.** Thermoplastische Formmassen nach den Ansprüchen 1 bis 6, dadurch gekennzeichnet, daß das Copolymerisat $A^1$ mit einem gepfropften Butadien- oder Acrylatkautschuk schlagzäh modifiziert ist.

**8.** Thermoplastische Formmassen nach den Ansprüchen 1 bis 7, dadurch gekennzeichnet, daß die Formmassen bis zu 40 Gew.-Teile, bezogen auf 100 Gew.-Teile der Summe aus A und B, eines von den gepfropften Butadien- und Acrylatkautschuken verschiedenen Kautschuks (C) enthalten.

**9.** Thermoplastische Formmassen nach den Ansprüchen 1 bis 8, dadurch gekennzeichnet, daß sie kein Halogen und 1 bis 40 Gew.-%, bezogen auf 100 Gew.-% der Formmasse einer Phosphor enthaltenden Verbindung D enthalten.

**10.** Verfahren zur Herstellung von thermoplastischen Formmassen gemäß den Ansprüchen 1 bis 9 durch Mischen der Komponenten bei einer Temperatur im Bereich von 200 bis 320 °C während 0,5 bis 30 Minuten.

## Claims

**1.** A thermoplastic molding material containing, as essential components,

A) from 3 to 97 parts by weight, based on the sum of A and B, of a styrene/acrylonitrile copolymer $A^1$ of at least 50% by weight of a vinylaromatic monomer of 8 to 12 carbon atoms, a nitrile-containing ethylenically unsaturated monomer of 3 to 6 carbon atoms and, if required, further ethylenically unsaturated comonomers which are copolymerizable therewith, $A^1$ being modified by reaction in the melt with at least one $\alpha,\beta$-unsaturated dicarbonyl compound $A^2$, and

B) from 3 to 97 parts by weight, based on the sum of A and B, of a polyphenylene ether $B^1$ or of a polymer component containing $B^1$,

the sum of A and B being 100 parts by weight.

**2.** A thermoplastic molding material as claimed in claim 1, wherein the compound $A^2$ is maleic acid, maleic anhydride, methylmaleic anhydride, a half-ester of maleic or fumaric acid with a $C_1$-$C_{12}$-alcohol or a semiamide thereof, N-phenylmaleimide or fumaric acid.

**3.** A thermoplastic molding material as claimed in either of claims 1 or 2, wherein the compound $A^2$ is

fumaric acid or the half-ester of maleic acid with isopropyl or 2-ethylhexyl alcohol.

**4.** A thermoplastic molding material as claimed in any of claims 1 to 3, wherein modification of $A^1$ is carried out in the absence or in the virtual absence of free radical initiators.

**5.** A thermoplastic molding material as claimed in any of claims 1 to 4, wherein $A^1$ is modified with from 0.05 to 20%, based on the sum of $A^1$ and $A^2$, of compound $A^2$.

**6.** A thermoplastic molding material as claimed in any of claims 1 to 5, wherein the molding material contains from 20 to 80 parts by weight of component A and from 20 to 80 parts by weight of component B, based in each case on 100 parts by weight of the sum of A and B.

**7.** A thermoplastic molding material as claimed in any of claims 1 to 6, wherein copolymer $A^1$ is toughened with a grafted butadiene or acrylate rubber.

**8.** A thermoplastic molding material as claimed in any of claims 1 to 7, wherein the molding material contains up to 40 parts by weight, based on 100 parts by weight of the sum of A and B, of a rubber (C) which differs from the grafted butadiene and acrylate rubbers.

**9.** A thermoplastic molding material as claimed in any of claims 1 to 8, which contains no halogen and from 1 to 40% by weight, based on 100% by weight of molding material, of a phosphorus-containing compound D.

**10.** A process for the preparation of a thermoplastic molding material as claimed in any of claims 1 to 9 by mixing the components at from 200 to 320 °C for from 0.5 to 30 minutes.

**Revendications**

**1.** Matières à mouler thermoplastiques contenant, à titre de composants essentiels,

A) 3 à 97 parties en poids, par rapport à la somme de A et de B, d'un copolymère de styrène et d'acrylonitrile $A^1$ constitué d'au moins 50% en poids d'un monomère vinylaromatique comportant de 8 à 12 atomes de carbone, d'un monomère éthyléniquement insaturé qui contient des groupes nitrile et possédant de 3 à 6 atomes de carbone et, éventuellement, d'autres comonomères éthyléniquement insaturés copolymérisables avec les monomères précités, où $A^1$ est modifié par réaction à l'état fondu avec au moins un composé dicarbonylé alpha,bêta-insaturé $A^2$ et

B) 3 à 97 parties en poids, par rapport à la somme de A et de B, d'un éther polyphénylique $B^1$ ou d'une fraction polymérique contenant $B^1$,

où la somme de A et de B est toujours égale à 100 parties en poids.

**2.** Matières à mouler thermoplastiques selon la revendication 1, caractérisées en ce que le composé $A^2$ est l'acide maléique, l'anhydride maléique, l'anhydride méthylmaléique, un hémi-ester de l'acide maléique ou de l'acide fumarique, avec un alcool en $C_1$ à $C_{12}$, ou leur hémi-amide, le N-phénylmaléimide ou l'acide fumarique.

**3.** Matières à mouler thermoplastiques selon les revendications 1 et 2, caractérisées en ce que le composé $A^2$ est l'acide fumarique ou un hémi-ester de l'acide maléique de l'alcool isopropylique ou de l'alcool 2-éthylhexylique

**4.** Matières à mouler thermoplastiques suivant les revendications 1 à 3, caractérisées en ce que l'on entreprend la modification de $A^1$ en l'absence ou pratiquement en l'absence d'amorceurs radicalaires.

**5.** Matières à mouler thermoplastiques selon les revendications 1 à 4, caractérisées en ce que $A^1$ est modifié à l'aide de 0,05 à 20%, par rapport à la somme de $A^1$ et de $A^2$, du composé $A^2$.

**6.** Matières à mouler thermoplastiques selon les revendications 1 à 5, caractérisées en ce que les matières à mouler contiennent de 20 à 80 parties en poids du composant A et de 20 à 80 parties en poids, à chaque fois par rapport à 100 parties en poids de la somme de A et de B, du composant B.

**7.** Matières à mouler thermoplastiques selon les revendications 1 à 6, caractérisées en ce que le copolymère $A^1$ est modifié à l'aide d'un caoutchouc greffé de butadiène ou d'acrylate, de manière à le rendre résistant au choc ou résilient.

**8.** Matières à mouler thermoplastiques selon les revendications 1 à 7, caractérisées en ce que les matières à mouler contiennent jusqu'à 40 parties en poids, par rapport à 100 parties en poids de la somme de A et de B, d'un caoutchouc (C) qui diffère du caoutchouc greffé de butadiène et d'acrylate.

**9.** Matières à mouler thermoplastiques selon les revendications 1 à 8, caractérisées en ce qu'elles ne contiennent pas d'halogène et de 1 à 40% en poids, par rapport à 100% en poids des matières à mouler, d'un composé D contenant du phosphore.

**10.** Procédé de fabrication de matières à mouler thermoplastiques selon les revendications 1 à 9, par le mélange des composants à une température qui varie de 200 à 320 ° C pendant 0,5 à 30 minutes.